# EUROPÄISCHE PATENTSCHRIFT

(11) **EP 3 124 091 B1**
(45) Veröffentlichungstag und Bekanntmachung des Hinweises auf die Patenterteilung: **07.10.2020**
(21) Anmeldenummer: 16174697.9
(22) Anmeldetag: 16.06.2016
(51) Int. Cl.: B01D 29/21

(54) **FALTENBALG, FILTERELEMENT UND VERFAHREN**
BELLOWS, FILTER ELEMENT AND METHOD
SOUFFLET, ELEMENT DE FILTRE ET PROCEDE

(30) Priorität: 29.07.2015 DE 102015009625
(43) Veröffentlichungstag der Anmeldung: 01.02.2017
(73) Patentinhaber: MANN + HUMMEL GMBH, 71636 Ludwigsburg (DE)
(72) Erfinder: Gehwolf, Klaus, 94437 Mamming (DE)
(74) Vertreter: Seyboth, Matthias

(56) Entgegenhaltungen:
- CH-A- 231 610
- DE-A1- 2 417 551
- DE-A1-102009 057 500

## Beschreibung

### Technisches Gebiet

Die vorliegende Erfindung betrifft ein Verfahren zum Herstellen eines Faltenbalgs.

### Stand der Technik

Filterelemente, wie beispielsweise Ölfilterelemente, weisen einen sternförmig gefalteten Endlosfaltenbalg auf, der zwischen zwei Endscheiben angeordnet ist. Um einen derartigen Endlosfaltenbalg zu bilden, sind ein erster Endabschnitt eines Filtermediums und ein zweiter Endabschnitt des Filtermediums miteinander verbunden,

DE 10 2011 011 771 A1 beschreibt ein Verfahren zum Herstellen eines Filterelements. Hierbei werden zwei Endabschnitte eines flächigen Filtermediums durch ein Kunststoffmaterial miteinander verbunden, indem zwischen den aufeinander liegenden Endabschnitten festes, insbesondere fadenförmiges, Kunststoffmaterial plastifiziert wird.

In DE 24 17 551 A1 ist ein Rundfilterelement beschrieben, dessen Endabschnitte mittels eines Kunstharzes miteinander verklebt sind.

DE 10 2009 057500 A1 offenbart ein Rundfilterelement mit einem zylindrischen Faltenbalg und einem konzentrischen Stützgitter, welche gemeinsam in eine Dichtmasse eingebettet sind, welche eine Endscheibe bildet. Das Material der Endscheibe kann aufquellbar sein.

CH 231 610 A beschreibt ein Verfahren zur Herstellung eines Schwebstoffluftfilters, indem mehrere Abschnitte eines Filtermediums an ihren Seitenkanten miteinander verbunden werden. Die Nahtstellen werden mittels eines flüssigen Bindemittels abgedichtet.

### Offenbarung der Erfindung

Vor diesem Hintergrund liegt der vorliegenden Erfindung die Aufgabe zugrunde, einen verbesserten Faltenbalg für ein Filterelement herzustellen.

Demgemäß wird ein Faltenbalg für ein Filterelement, mit einem flächigen Filtermedium, wobei ein erster Endabschnitt des Filtermediums mit Hilfe eines vulkanisierbaren Klebematerials mit einem zweiten Endabschnitt des Filtermediums verklebt ist, vorgeschlagen. Im Gegensatz zu einem thermoplastischen Kunststoffmaterial weist das vulkanisierbare Klebematerial elastomere Eigenschaften auf. Hierdurch ist der Faltenbalg sehr weit verformbar, ohne dass die Verklebung der Endabschnitte beschädigt wird. Insbesondere ist das vulkanisierbare Klebematerial besonders beständig gegen Fluide wie Kraftstoff oder Öl. Im Vergleich zu einer Verbindung mit Polyurethanmaterial weist das vulkanisierbare Klebematerial eine deutlich höhere Viskosität auf, wodurch eine Form zum Anbringen des Klebematerials an den Endabschnitten nicht zwingend erforderlich ist. Insbesondere reagiert das Klebematerial beim Erhitzen chemisch, so dass dieses vernetzt, aufquillt und/oder aufschäumt. Der Faltenbalg kann auch als Endlosfaltenbalg bezeichnet werden.

Erfindungsgemäß weist das Klebematerial Kautschuk auf. Das Klebematerial kann natürlichen und/oder synthetischen Kautschuk aufweisen. Weiterhin kann das Klebematerial Schwefel oder schwefelspendende Stoffe wie Dischwefeldichlorid, Füllstoffe sowie Katalysatoren zur Erhöhung der Reaktionsgeschwindigkeit aufweisen.

Bei weiteren Ausführungsformen ist das Klebematerial durch Wärmeeinwirkung aufschäumbar und/oder expandierbar. Hierdurch dringt das Klebematerial auch in kleine Hohlräume oder Spalten ein, wodurch eine besonders gute Verbindung und Versiegelung der Endabschnitte des Filtermediums erreicht wird.

Bei weiteren Ausführungsformen ist das Filtermedium mehrlagig, wobei das Klebematerial einzelne Lagen des Filtermediums an den Endabschnitten miteinander verbindet. Insbesondere ist das Klebematerial dazu eingerichtet, Schnittkanten des mehrlagigen Filtermediums zu versiegeln. Hierdurch wird nicht nur eine dauerhafte Verbindung der Endabschnitte miteinander erzielt, sondern auch eine Versiegelung der Schnittkanten erreicht.

Bei weiteren Ausführungsformen ist das Filtermedium gefaltet, wobei jeweils Endfalten des Filtermediums die Endabschnitte bilden. Das Filtermedium ist insbesondere so angeordnet, dass der Faltenbalg sternförmig ausgebildet ist. Insbesondere bildet das Filtermedium einen geschlossenen Ring. Alternativ kann das Filtermedium auch ungefaltet und somit glatt sein.

Bei weiteren Ausführungsformen ist das Klebematerial dazu eingerichtet, das Filtermedium zu imprägnieren. Hierdurch dringt das Klebematerial in das Filtermedium ein, wodurch die Endabschnitte fluiddicht versiegelt und miteinander verbunden werden.

Weiterhin wird ein Filterelement mit einem derartigen Faltenbalg vorgeschlagen. Das Filterelement weist vorzugsweise eine erste Endscheibe und eine zweite Endscheibe auf, wobei der Faltenbalg zwischen den Endscheiben angeordnet ist. Das Filterelement findet vorzugsweise in Kraftfahrzeugen, Lastkraftwagen, Baufahrzeugen, Wasserfahrzeugen, Schienenfahrzeugen, landwirtschaftlichen Maschinen bzw. Fahrzeugen oder Luftfahrzeugen Anwendung, Das Filterelement kann dazu eingerichtet sein, Wasser, Luft, Harnstofflösung, Öl oder Kraftstoffe, wie Dieselkraftstoff, Kerosin oder Benzin zu filtern. Das Filterelement kann beispielsweise ein Ölfilter, ein Kraftstofffilter oder dergleichen sein.

Erfindungsgemäß wird ein Verfahren zum Herstellen eines Faltenbalgs vorgeschlagen. Das Verfahren umfasst die folgenden Verfahrensschritte: Bereitstellen eines flächigen Filtermediums; Bereitstellen eines vulkanisierbaren Klebematerials; und Verkleben eines ersten Endabschnitts des Filtermediums mit Hilfe des Klebematerials mit einem zweiten Endabschnitt des Filtermediums, wobei das Klebematerial vulkanisiert wird. Zum Vulkanisieren des Klebematerials wird dieses erhitzt. Hierzu können beispielsweise Heizbacken vorgesehen sein. Vorzugsweise ist das erhitzte Klebematerial hochviskos, so dass dieses nicht verläuft.

Erfindungsgemäß wird das Klebematerial vor dem Bereitstellen desselben extrudiert. Das Klebematerial kann glatt, mehrlagig oder gewalzt sein. Insbesondere kann das Klebematerial in jede beliebige Querschnittsgeometrie extrudiert werden. Beispielsweise kann das Klebematerial eine E-förmige, T-förmige oder W-förmige Querschnittsgeometrie aufweisen.

Bei weiteren Ausführungsformen wird das Klebematerial in einer Form vulkanisiert. Vorzugsweise werden das Klebematerial und zumindest teilweise die Endabschnitte in die Form eingelegt. Durch ein Erhitzen der Form wird das Klebematerial aufgekocht und expandiert und/oder schäumt auf, wodurch dieses die Endabschnitte fluiddicht und dauerhaft miteinander verbindet.

Weitere mögliche Implementierungen der Erfindung umfassen auch nicht explizit genannte Kombinationen von zuvor oder im Folgenden bezüglich der Ausführungsbeispielen beschriebenen Merkmale oder Verfahrensschritte. Dabei wird der Fachmann auch einzelne Aspekte als Verbesserungen oder Ergänzungen zu der jeweiligen Grundform der Erfindung hinzufügen.

### Kurze Beschreibung der Zeichnungen

Weitere Ausgestaltungen der Erfindung sind Gegenstand der Unteransprüche sowie der im Folgenden beschriebenen Ausführungsbeispiele der Erfindung. Im Weiteren wird die Erfindung anhand von Ausführungsbeispielen unter Bezugnahme auf die beigelegten Figuren näher erläutert. Es zeigt dabei:
- Fig. 1:: eine schematische perspektivische Teilschnittansicht einer Ausführungsform eines Filterelements;
- Fig. 2:: eine schematische Aufsicht einer Ausführungsform eines Faltenbalgs für das Filterelement gemäß Fig. 1;
- Fig. 3:: einen vergrößerten Ausschnitt des Faltenbalgs gemäß Fig. 2 entsprechend dem Ausschnitt III der Fig. 2;
- Fig. 4:: eine schematische Aufsicht einer Ausführungsform eines Klebematerials für den Faltenbalg gemäß Fig. 2;
- Fig. 5:: eine schematische Aufsicht einer Ausführungsform einer Form zum Verarbeiten des Klebematerials gemäß Fig. 4;
- Fig. 6:: eine schematische perspektivische Ansicht einer weiteren Ausführungsform eines Klebematerials für den Faltenbalg gemäß Fig. 2;
- Fig. 7:: eine schematische perspektivische Ansicht einer weiteren Ausführungsform eines Klebematerials für den Faltenbalg gemäß Fig. 2; und
- Fig. 8:: eine schematische Blockdiagrammdarstellung eines Verfahrens zum Herstellen eines Faltenbalgs.

In den Figuren sind gleiche oder funktionsgleiche Elemente, sofern nichts anderes angegeben ist, mit denselben Bezugszeichen versehen worden.

### Ausführungsformen der Erfindung

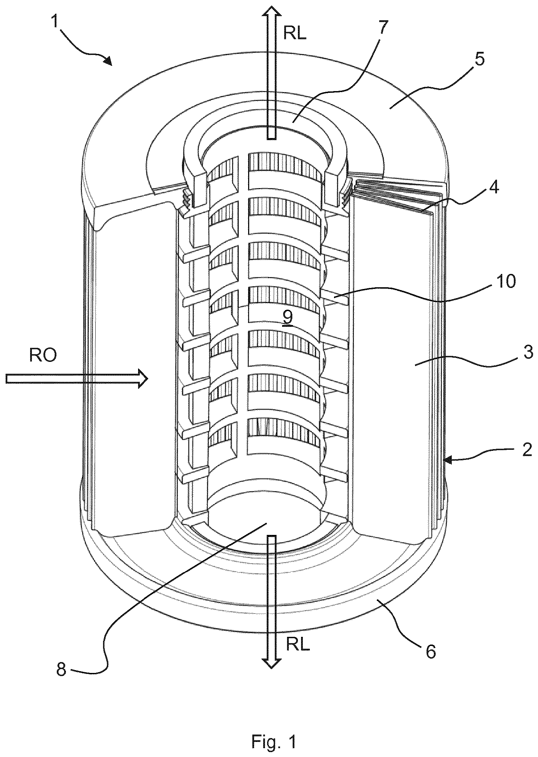

Fig. 1 zeigt eine schematische perspektivische Teilschnittansicht eines Ausführungsbeispiels eines Filterelements 1. Das Filterelement 1 kann geeignet sein, Wasser, Luft, Harnstofflösung, Öl oder Kraftstoffe, wie Dieselkraftstoff, Kerosin oder Benzin zu filtern. Insbesondere findet das Filterelement 1 in Kraftfahrzeugen, Lastkraftwagen, Baufahrzeugen, Wasserfahrzeugen, Schienenfahrzeugen oder Luftfahrzeugen Anwendung. Weiterhin kann das Filterelement 1 auch in Gebäuden Anwendung finden. Beispielsweise kann das Filterelement 1 ein Luftfilter, Ölfilter, Kraftstofffilter oder dgl. sein.

Das Filterelement 1 umfasst einen Faltenbalg 2, insbesondere einen Endlosfaltenbalg. Der Faltenbalg 2 ist aus einem Filtermedium 3 gefertigt. Insbesondere ist das Filtermedium 3 als Faltenpack aus plissiertem Filtermaterial ausgebildet. Häufig werden Kunststoffvliesmaterialien zickzackförmig gefaltet als Filtermaterialien verwendet. Das Filtermedium 3 umfasst beispielsweise ein Filtergewebe, Filtergelege oder ein Filtervlies. Insbesondere kann das Filtermedium 3 in einem Spinnvlies- oder Meltblown-Verfahren hergestellt sein. Weiterhin kann das Filtermedium 3 verfilzt oder vernadelt sein. Das Filtermedium 3 kann Naturfasern, wie Cellulose oder Baumwolle, oder Kunstfasern, beispielsweise aus Polyester, Polyvinylsulfit oder Polytetrafluorethylen, aufweisen. Fasern des Filtermediums 3 können bei der Verarbeitung in, schräg und/oder quer zur Maschinenrichtung orientiert sein.

Auf Faltenprofilen 4 des gefalteten Filtermediums 3, welches den Faltenbalg 2 bildet, ist in der Orientierung der Fig. 1 an jeweils einer Endseite des Filtermediums 3 oberseitig und unterseitig eine Endscheibe 5, 6 vorgesehen. Das Filterelement 1 weist mindestens eine Endscheibe 5, 6, bevorzugt jedoch zwei Endscheiben 5, 6, auf. Insbesondere sind die Endscheiben 5, 6 fluiddicht mit dem Filtermedium 3 verbunden. Es kann dabei eine Verklebung der Endscheiben 5, 6 mit beispielsweise einer Klebefolie, die dem Filtermedium 3 zugewandt ist, mit dem Filtermedium 3 erfolgen. Durch die Endscheiben 5, 6 erfährt das Filterelement 1 eine gewisse Stabilität und kann in einen entsprechenden Fluidkreislauf eingesetzt werden, Das Filtermedium 3 kann auch in teilweise aufgeschmolzenes Material der Endscheiben 5, 6 eingedrückt sein. Eine Anschlussöffnung 7 ist z.B. Teil der oberen Endscheibe 5. Analog kann die untere Endscheibe 6 ebenfalls eine Anschlussöffnung 8 haben, die wie die Anschlussöffnung 7 der oberen Endscheibe 5 an einem Betriebsmittelanschluss anschließbar ist.

In der Orientierung der Fig. 1 sind oberseitig Faltenprofile 4 des Faltenbalgs 2 gezeigt. Im Betrieb, beispielsweise als Ölfilter, durchströmt das zu filternde Fluid, wie beispielsweise Öl, die durch das plissierte Filtermedium 3 vergrößerte Filteroberfläche. In der Regel werden die Filtermaterialien und Geometrien des Filtermediums 3 oder des Filterelements 1 auf eine vorgegebene Durchströmrichtung angepasst. Beispielsweise ist in Fig. 1 von seitlich das Rohfluid RO und nach oben und unten das filtrierte Reinfluid RL gezeigt. Insofern ist in der Orientierung der Fig. 1 eine einem Innenraum 9 des Filterelements 1 zugewandte Fläche des Faltenbalgs 2 die Abströmseite und die äußere Mantelfläche des zylinderförmigen Faltenbalgs 2 die Anströmseite des Filterelements 1. Innerhalb des Faltenbalgs 2 ist ein optionales Stützelement 10, insbesondere ein Stützrohr, vorgesehen, welches zwischen den Endscheiben 5, 6 vorliegt. Das Stützelement 10 kann mit den Endscheiben 5, 6 verbunden sein.

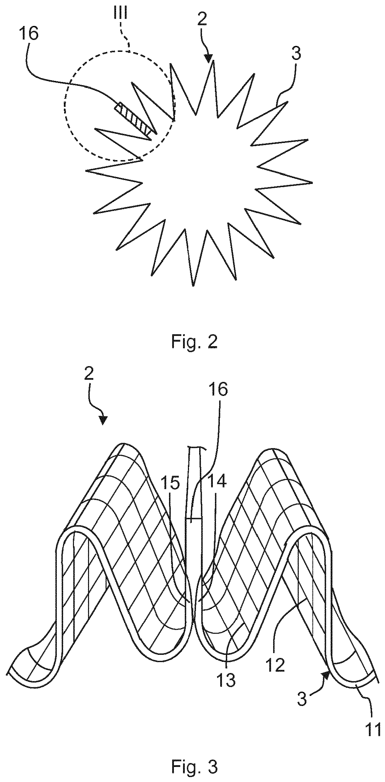

Fig. 2 zeigt eine schematische Aufsicht einer Ausführungsform des Faltenbalgs 2. Wie Fig. 2 zeigt, ist der Faltenbalg 2 sternförmig und ringförmig geschlossen. Der Faltenbalg 2 ist daher ein Endlosfaltenbalg.

Fig. 3 zeigt einen vergrößerten perspektivischen Ausschnitt der Fig 2 gemäß dem in Fig. 2 umrandeten Bereich III. Im Folgenden wird auf Fig. 2 und 3 gleichzeitig Bezug genommen.

Das Filtermedium 3 kann eine Filterlage 11 sowie beidseitig der Filterlage 11 angeordnete Stützstrukturen 12, 13 aufweisen. Die Stützstrukturen 12, 13 können gitterförmig sein. Das Filtermedium 3 weist einen ersten Endabschnitt 14 und einen zweiten Endabschnitt 15 auf. Der erste Endabschnitt 14 des Filtermediums 3 ist zur Bildung des Faltenbalgs 2 mit Hilfe eines vulkanisierbaren Klebematerials 16 mit dem zweiten Endabschnitt 15 verklebt. Das Klebematerial 16 umfasst erfindungsgemäß Kautschuk, vorzugsweise synthetischen und/oder natürlichen Kautschuk. Das Klebematerial 16 kann ferner Schwefel oder schwefelspendende Stoffe wie Dischwefeldichlorid und Katalysatoren umfassen. Das Klebemateriai 16 liegt in extrudierter Form vor. Insbesondere ist das Klebematerial 16 durch Wärmeeinwirkung aufschäumbar und/oder expandierbar.

Vorzugsweise ist das Klebematerial 16 dazu eingerichtet, das Filtermedium 3 zu imprägnieren. Beim Erhitzen des Klebematerials 16 reagiert dieses chemisch, wodurch dieses expandiert und in das Filtermedium 3 eindringt. Hierdurch werden die Endabschnitte 14, 15 des Filtermediums versiegelt sowie fluiddicht miteinander verbunden. Wie Fig. 3 zeigt, bilden jeweils Falten, insbesondere Endfalten, die Endabschnitte 14, 15 des Filtermediums 3.

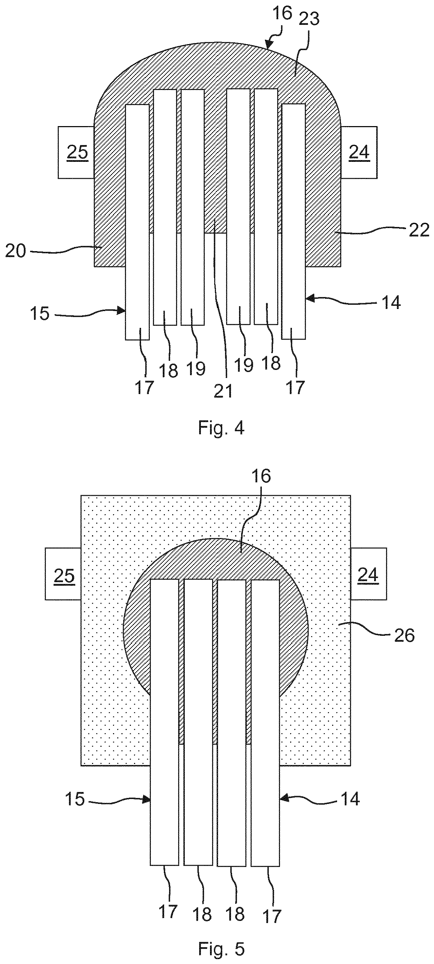

Fig. 4 zeigt, dass das Filtermedium 3 und insbesondere die Endabschnitte 14, 15 mehrere Lagen 17 bis 19 aufweisen können. Das Klebematerial 16 ist erfindungsgemäß extrudiert und kann beispielsweise im Querschnitt eine E-förmige Geometrie mit drei Stegen 20 bis 22 aufweisen, die sich aus einem Basisabschnitt 23 heraus erstrecken. Die Endabschnitte 14, 15 werden zwischen den Stegen 20 bis 22 angeordnet, und das Klebematerial 16 kann beispielsweise mit Hilfe von Heizbacken 24, 25 erhitzt werden. Durch das Erhitzen reagiert das Klebematerial 16 chemisch, insbesondere vulkanisiert es, wobei das Klebematerial 16 in und zwischen die einzelnen Lagen 17 bis 19 der Endabschnitte 14, 15 eindringt und diese fluiddicht miteinander verbindet.

Fig. 5 zeigt eine Form 26 zum Erhitzen des Klebematerials 16. Das Klebematerial 16 wird in die Form 26 eingelegt, wobei die Endabschnitte 14, 15 zumindest teilweise ebenfalls in der Form 26 angeordnet sind. Durch ein Erhitzen der Form 26 kocht das Klebematerial 16 auf und imprägniert sowie umhüllt die Endabschnitte 14, 15 so, dass diese fluiddicht miteinander verbunden sind. Außenseitig an der Form 26 können Heizbacken 24, 25 angeordnet sein. Alternativ können die Heizbacken 24, 25 in die Form 26 integriert sein.

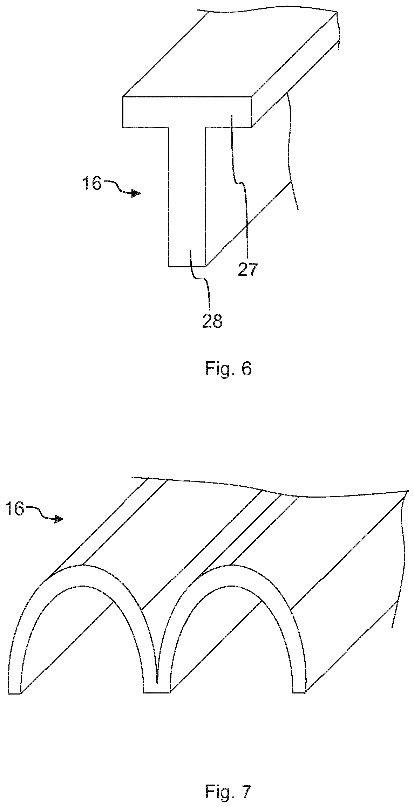

Fig. 6 zeigt eine Ausführungsform eines Klebematerials 16 in einer extrudierten Form, wobei das Klebematerial 16 eine T-förmige Geometrie mit einem horizontal verlaufenden kurzen Steg 27 und einem vertikal verlaufenden langen Steg 28 umfasst. Die Querschnittsgeometrie des Klebematerials 16 ist völlig beliebig und kann an die zu verbindenden Endabschnitte 14, 15 bzw. an die Anzahl der miteinander zu verbindenden Lagen 17 bis 19 der Endabschnitte 14, 15 angepasst sein.

Fig. 7 zeigt eine weitere Ausführungsform eines extrudierten Klebematerials 16. Das extrudierte Klebematerial 16 weist beispielsweise eine M- oder umgedrehte W-Form auf. Zwischen den Schenkeln der M- oder W-Form können die Endabschnitte 14, 15 angeordnet sein.

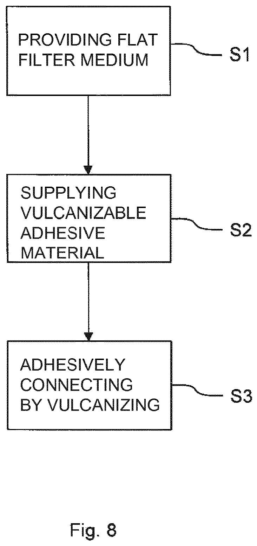

Fig. 8 zeigt schematisch ein Blockdiagramm eines Verfahrens zum Herstellen eines derartigen Faltenbalgs 2. In einem Schritt S1 wird das flächige Filtermedium 3 bereitgestellt. Dabei kann dieses zickzackförmig gefaltet werden. In einem Schritt S2 wird das vulkanisierbare Klebematerial 16 bereitgestellt. Bei oder vor dem Bereitstellen des Klebematerials 16 wird dieses in eine gewünschte Form extrudiert.

In einem Schritt S3 wird der erste Endabschnitt 14 des Filtermediums 3 mit Hilfe des Klebematerials 16 mit dem zweiten Endabschnitt 15 des Filtermediums 3 verklebt, wobei das Klebematerial 16 vulkanisiert wird. Insbesondere kann das Klebematerial 16 in der Form 26 vulkanisiert werden. Beim Vulkanisieren des Klebematerials 16 schäumt dieses auf und/oder expandiert. Insbesondere dringt beim Vulkanisieren des Klebematerials 16 dieses in die Endabschnitte 14, 15 des Filtermediums 3 ein und verbindet diese somit fluiddicht.

Das Klebematerial 16, das auch als Klebefolie bezeichnet werden kann, ist gegenüber Fluiden wie Kraftstoff oder Öl beständig. Weiterhin dringt das Klebematerial 16 durch sein Quellverhalten gut in das Filtermedium 3 ein und verbindet die Endabschnitte 14, 15 des Filtermediums 3 zuverlässig miteinander. Weiterhin können Schnittkanten von mehrlagigen Filtermedien 3 zuverlässig und fluiddicht eingefasst werden.

## Patentansprüche

1. Verfahren zum Herstellen eines Faltenbalgs (2), mit folgenden Verfahrensschritten:
Bereitstellen (S1) eines flächigen Filtermediums (3) mit einem ersten Endabschnitt (14) und einem zweiten Endabschnitt (15);
Extrudieren eines vulkanisierbaren Kautschuk aufweisenden Klebematerials (16);
Bereitstellen (S2) des vulkanisierbaren Klebematerials (16); und
Verkleben (S3) des ersten Endabschnitts (14) des Filtermediums (3) mit Hilfe des Klebematerials (16) mit dem zweiten Endabschnitt (15) des Filtermediums (3), wobei das Klebematerial (16) vulkanisiert wird.

2. Verfahren nach Anspruch 1, wobei das Klebematerial (16) in einer Form (26) vulkanisiert wird.

3. Verfahren nach Anspruch 1 oder 2, wobei das Klebematerial (16) durch Wärmeeinwirkung aufgeschäumt und/oder expandiert wird.

4. Verfahren nach einem der vorangehenden Ansprüchen, wobei das Filtermedium (3) mehrlagig ausgebildet ist und die Querschnittsform des Klebematerials (16) an die Anzahl der miteinander zu verbindenden Lagen (17- 19) der Endabschnitte (14, 15) des Filtermediums (3) angepasst wird.

5. Verfahren nach einem der vorangehenden Ansprüche, wobei das Filtermedium (3) vor dem Verkleben gefaltet wird und die Endabschnitte (14, 15) des Filtermediums (3) jeweils durch Endfalten gebildet werden.

6. Verfahren nach einem der vorangehenden Ansprüche, wobei das Filtermedium (3) mittels des Klebematerials (16) imprägniert wird.

## Claims

1. Method for manufacturing a bellows (2), comprising the following process steps:
Providing (S1) a flat filter medium (3) having a first end portion (14) and a second end portion (15);
Extruding an adhesive material (16) featuring a vulcanizable rubber;
Providing (S2) the vulcanizable adhesive material (16); and
Adhesively connecting (S3) the first end portion (14) of the filter medium (3) to the second end portion (15) of the filter medium (3) using the adhesive material (16), wherein the adhesive material (16) is vulcanized.

2. Method according to claim 1, wherein the adhesive material (16) is vulcanized in a mold (26).

3. Method according to claim 1 or 2, wherein the adhesive material (16) is foamed and/or expanded under heat.

4. Method according to one of the preceding claims, wherein the filter medium (3) is multilayered and the cross-sectional shape of the adhesive material (16) is adapted to the number of layers (17-19) to be connected to each other of the end portions (14, 15) of the filter medium (3).

5. Method according to one of the preceding claims, wherein the filter medium (3) is pleated before being adhesively connected and the end portions (14, 15) of the filter medium (3) are each formed by end folds.

6. Method according to one of the preceding claims, wherein the filter medium (3) is impregnated using the adhesive material (16).

## Revendications

1. Procédé de fabrication d'un soufflet (2), comprenant les étapes de procédé suivantes:
Mise à disposition (S1) d'un milieu filtrant plane (3) ayant une première section d'extrémité (14) et une seconde section d'extrémité (15);
Extrusion d'un matériau adhésif (16) présentant un caoutchouc vulcanisable;
Mise à disposition (S2) d'un matériau adhésif vulcanisable (16); et
Collage (S3) de la première section d'extrémité (14) du milieu filtrant (3) à l'aide du matériau adhésif (16) avec la seconde section d'extrémité (15) du milieu filtrant (3), dans lequel le matériau adhésif (16) est vulcanisé.

2. Procédé selon la revendication 1, dans lequel le matériau adhésif (16) est vulcanisé dans un moule (16).

3. Procédé selon la revendication 1 ou 2, dans lequel le matériau adhésif (16) est moussé et/ou expansé par l'effet de la chaleur.

4. Procédé selon l'une des revendications précédentes, dans lequel le milieu filtrant (3) est réalisé en plusieurs couches et la forme de la section transversale du matériau adhésif (16) est adaptée au nombre des couches (17-19) à relier entre elles des sections d'extrémité (14, 15) du milieu filtrant (3).

5. Procédé selon l'une des revendications précédentes, dans lequel le milieu filtrant (3) est plié avant le collage et les sections d'extrémité (14, 15) du milieu filtrant (3) sont chacune formées par des plis d'extrémité.

6. Procédé selon l'une des revendications précédentes, dans lequel le milieu filtrant (3) est imprégné au moyen du matériau adhésif (16).
